# EUROPEAN PATENT SPECIFICATION

(11) **EP 4 007 251 B1**
(45) Date of publication and mention of the grant of the patent: **03.09.2025**
(21) Application number: 21207790.3
(22) Date of filing: 11.11.2021
(51) Int. Cl.: H04N 1/32, H04N 1/00

(54) **SERVER, MANAGEMENT SYSTEM, MANAGING METHOD, AND CARRIER MEANS**
SERVER, VERWALTUNGSSYSTEM, VERWALTUNGSVERFAHREN UND TRÄGERMITTEL
SERVEUR, SYSTÈME DE GESTION, PROCÉDÉ DE GESTION ET MOYENS DE SUPPORT

(30) Priority: 30.11.2020 JP 2020199084
(43) Date of publication of application: 01.06.2022
(73) Proprietor: Ricoh Company, Ltd., Tokyo 143-8555 (JP)
(72) Inventor: Kodaira, Itaru, Tokyo, 143-8555 (JP); Ikkanzaka, Hiroaki, Tokyo, 143-8555 (JP)
(74) Representative: Marks & Clerk LLP

(56) References cited:
- JP-A- 2018 010 547
- US-A1- 2011 119 616

## Description

### BACKGROUND

### Technical Field

Embodiments of the present disclosure relate to a server, a management system, a method for controlling a status of a facsimile document, and carrier means.

### Related Art

There are cases where the status of a document to be managed changes from moment to moment. For real-time ascertaining of the current status of a document, there is known a technology of changing the current status of an unread document from unread to read in response to an operation of reading all pages of the document, and changing the current status of the document from unread to hold in response to an operation of reading a part of the pages of the unread document (for example, Japanese Unexamined Patent Application Publication No. 2009-115877).

For example, a facsimile document received from a sender facsimile machine is accumulated in a receiver facsimile machine. When the received document is read using the receiver facsimile machine, the status of the received document is changed from an unread status to a read status. In recent years, there is a system for accumulating received facsimile documents in a cloud or the like so that the received documents can be viewed from a device other than the receiver facsimile machine.

Additionally, there are systems in which a received document is viewable from an apparatus or device other than the receiver apparatus. In such a system, if a received document viewed from a device other than the receiver apparatus is unconditionally changed from an unread status to a read status, a user who should view the received document may overlook the received document. The information processing system disclosed by Japanese Unexamined Patent Application Publication No. 2009-115877 does not address the above inconvenience. JP2018010547 discloses an information coordination system and US2011119616 proposes a displayable information management system.

### SUMMARY

In view of the foregoing, an object of the present disclosure is to control a change of read/unread status of a document that is transmitted from a sender apparatus and viewed from an apparatus or device other than a receiver apparatus. A server for controlling a status of a document transmitted by facsimile is provided in accordance with claim 1. Further aspects and preferred embodiments are set out in claim 2 et seq.

In order to achieve the above-described object, there are provided a server for controlling a status of a document transmitted by facsimile from a sender apparatus to a receiver apparatus as described in appended claims. Advantageous embodiments are defined by the dependent claims.

Accordingly, the read/unread status of the received document viewed from an apparatus or device other than the receiver apparatus is properly controlled.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram illustrating an example of a configuration of an information processing system according to embodiments of the present disclosure;
FIG. 2 is a block diagram illustrating an example of a hardware configuration of a computer as one example of a facsimile reception server of the information processing system illustrated in FIG. 1;
FIG. 3 is a block diagram illustrating an example of a hardware configuration of a multifunction peripheral (MFP) according to one embodiment of the present disclosure;
FIG. 4 is a schematic diagram illustrating an example of a functional configuration of the management system illustrated in FIG. 1;
FIG. 5 is a diagram illustrating an example of facsimile transmission and reception in the management system, according to a first embodiment;
FIG. 6 illustrates an example of the received document table;
FIGS. 7A, 7B, and 7C illustrate examples of screen transition on a control panel of a receiver apparatus of the management system illustrated in FIG. 1;
FIGS. 8A, 8B, and 8C illustrate examples of screen transition on the control panel of the receiver apparatus of the management system illustrated in FIG. 1;
FIG. 9 is a flowchart illustrating an example of operation of receiving a facsimile document, performed by the facsimile reception server of the information processing system illustrated in FIG. 1;
FIG. 10 is a sequence diagram illustrating an example of a process when a user acquires, with an apparatus, a received document stored in the facsimile reception server and views the document, according to one embodiment;
FIG. 11 is a flowchart illustrating an example of operation performed by the facsimile reception server of the information processing system illustrated in FIG. 1, when receiving a download request of a received document;
FIG. 12 is a sequence diagram illustrating an example of a process when a user acquires, with an apparatus, a received document stored in the facsimile reception server and views the document, according to one embodiment;
FIG. 13 illustrates an example of a user management table;
FIG. 14 is a flowchart illustrating an example of operation performed by the facsimile reception server of the information processing system illustrated in FIG. 1, when receiving a download request of a received document;
FIG. 15 is a diagram illustrating an example of a process of updating a user management table, according to one embodiment;
FIG. 16 is a flowchart of an example of update process of a user management table performed by the facsimile reception server, according to one embodiment;
FIG. 17 is a diagram illustrating another example of facsimile transmission and reception in the management system illustrated in FIG. 1;
FIG. 18 illustrates an example of a site management table;
FIG. 19 is a flowchart illustrating an example of a process performed by the facsimile reception server that has received a download request for a received document, according to one embodiment;
FIG. 20 is a diagram illustrating another example of facsimile transmission and reception in a management system according to a second embodiment; and
FIG. 21 illustrates an example of a management table associating a user, an organization, an owner organization of the apparatus, and a facsimile number with each other.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result falling within the scope of the appended claims.

Referring now to the drawings, embodiments of the present disclosure are described below. As used herein, the singular forms "a," "an," and "the" are intended to include the plural forms as well, unless the context clearly indicates otherwise.

Referring now to the drawings, embodiments of the present disclosure are described below. As used herein, the singular forms "a," "an," and "the" are intended to include the plural forms as well, unless the context clearly indicates otherwise.

Referring to the drawings, embodiments of the present disclosure are described. In the present disclosure, the "site" is a place serving as a home (or platform) of an activity or a foothold for the activity, and is, for example, a place, a department, a business, or the like.

### First Embodiment

### System Configuration

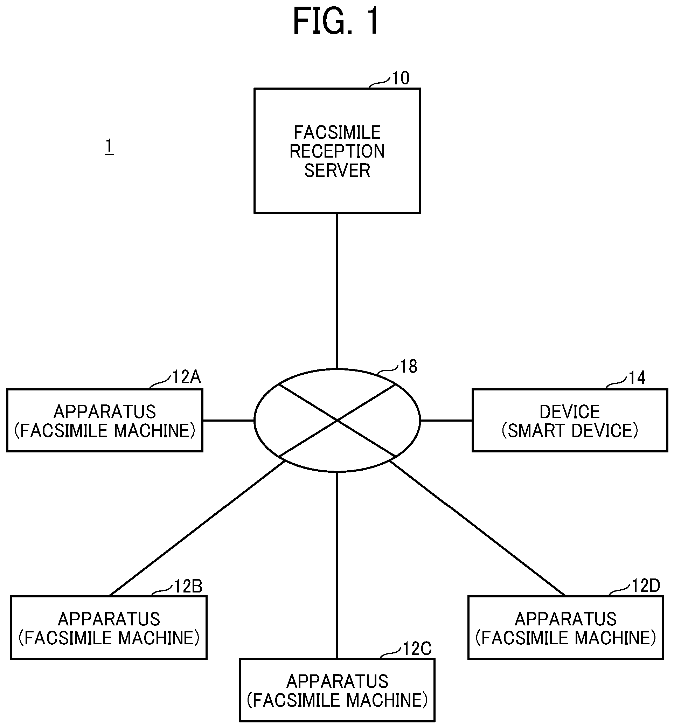

FIG. 1 is a schematic diagram illustrating an example of a configuration of a management system according to the present embodiment. FIG. 1 illustrates a management system 1 in which a facsimile reception server 10, apparatuses 12A to 12D such as facsimile machines, and a device 14 such as a smart device are connected via a network 18. The network 18 is, for example, a telephone network, the Internet, or a local area network (LAN) for data communication. Any one of the apparatuses 12A to 12D may be simply referred to as the apparatus 12.

The apparatus 12 performs facsimile transmission and reception. The apparatus 12 is, for example, a facsimile machine, a multifunction peripheral (MFP), or the like. The term "MFP" also represents a multifunction product and a multifunction printer. The apparatus 12 accesses the facsimile reception server 10 via the network 18. When transmitting a facsimile document, the apparatus 12 that is the sender apparatus transmits the facsimile document to the facsimile reception server 10, designating a facsimile number (receiver number) of a receiver apparatus. The apparatus 12 that is the receiver apparatus receives the facsimile document from the facsimile reception server 10.

The facsimile reception server 10 is implemented by one or more information processing apparatuses. Alternatively, the facsimile reception server 10 may be implemented using a cloud. The facsimile reception server 10 receives and stores facsimile documents (received document) addressed to the apparatus 12 of, for example, an organization such as a company having a plurality of sites.

The device 14 is, for example, a smart device of a user belonging to the organization. Examples of the device 14 includes a head up display (HUD) device, an industrial machine, a network home appliance, a mobile phone, a smartphone, a tablet terminal, a game console, and a personal digital assistant (PDA).

The received document stored in the facsimile reception server 10 can be acquired by, not limited to the receiver apparatus 12, any of the apparatuses 12 and the device 14 that are accessible to the facsimile reception server 10 via the network 18. In such a system, if a received document viewed from a device other than the receiver apparatus is unconditionally changed from an unread status to a read status, a user who should view the received document may overlook the received document. In view of the foregoing, the facsimile reception server 10 manages (controls) the read/unread status of the stored received documents as described later.

The notification of facsimile reception to the receiver apparatus 12 may be push notification in which the facsimile reception server 10 notifies the receiver apparatus 12 of the facsimile reception, or may be pull notification in which the receiver apparatus 12 makes an inquiry to the facsimile reception server 10.

The configuration of the management system 1 illustrated in FIG. 1 is one example. For example, at least a part of functions of the apparatuses 12 and the device 14 may be implemented by the facsimile reception server 10. At least a part of the functions of the facsimile reception server 10 may be implemented by another server such as a management server other than the facsimile reception server 10, or may be implemented by the apparatus 12 or the device 14.

### Hardware Configuration

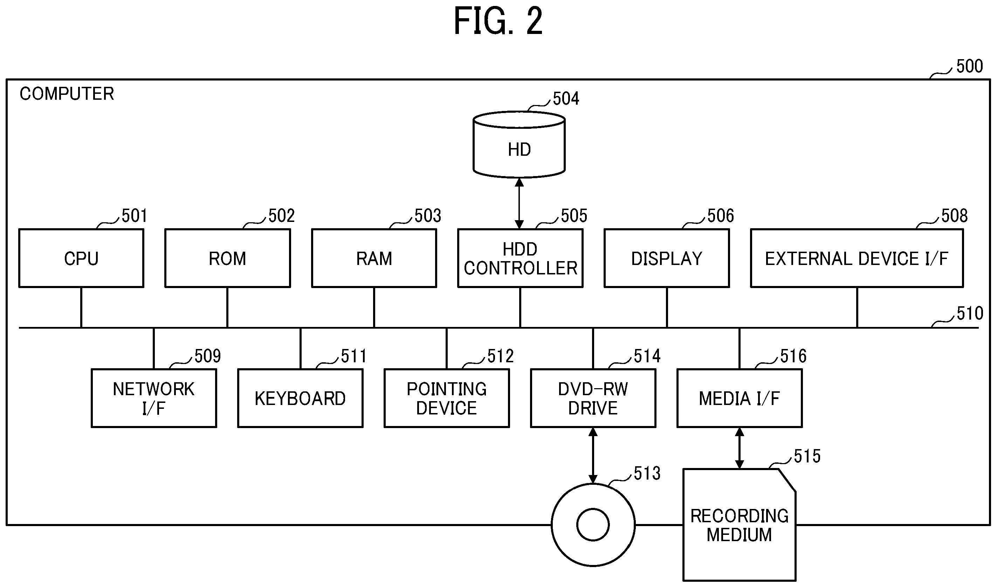

The facsimile reception server 10 illustrated in FIG. 1 is implemented by, for example, a computer 500 (information processing apparatus) having a hardware configuration as illustrated in FIG. 2. The device 14 illustrated in FIG. 1 may be implemented by the computer 500 having a hardware configuration as illustrated in FIG. 2. FIG. 2 is a block diagram illustrating an example of a hardware configuration of a computer according to the present embodiment.

The computer 500 includes a central processing unit (CPU) 501, a read only memory (ROM) 502, a random access memory (RAM) 503, a hard disk (HD) 504, a hard disk drive (HDD) controller 505, a display 506, an external device interface (I/F) 508, a network I/F 509, a data bus 510, a keyboard 511, a pointing device 512, a digital versatile disk rewritable (DVD-RW) drive 514, and a media I/F 516.

The CPU 501 controls entire operation of the computer 500 according to a program. The ROM 502 stores a program such as an initial program loader (IPL) used for driving the CPU 501. The RAM 503 is used as a work area for the CPU 501. The HD 504 stores various data such as a program. The HDD controller 505 controls reading and writing of various data from and to the HD 504 under control of the CPU 501.

The display 506 displays various information such as a cursor, a menu, a window, a character, and an image. The external device I/F 508 is an interface for connecting various external devices. The external device in this case is, for example, a universal serial bus (USB) memory. The network I/F 509 is an interface for data communication using the network 18. Examples of the data bus 510 include, but not limited to, an address bus and a data bus that electrically connect the components, such as the CPU 501, with one another.

The keyboard 511 is one example of an input device provided with a plurality of keys for allowing a user to input characters, numerals, or various instructions. The pointing device 512 is an example of an input device that allows a user to select or execute a specific instruction, select an item to be processed, or move a cursor being displayed. The DVD-RW drive 514 reads and writes various data from and to a DVD-RW 513, which is an example of a removable recording medium. The removable storage medium is not limited to the DVD-RW and may be a DVD-recordable (DVD-R) or the like. The media I/F 516 controls reading and writing (storing) of data from and to a recording medium 515 such as a flash memory.

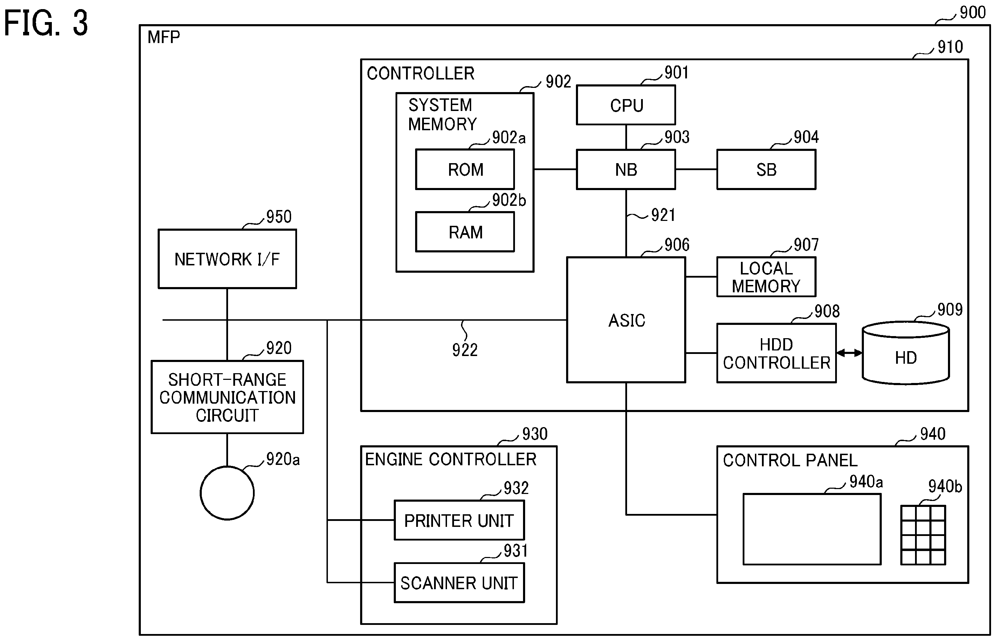

The apparatus 12 illustrated in FIG. 1 may be implemented by an MFP 900 having a hardware configuration as illustrated in FIG. 3. FIG. 3 is a block diagram illustrating an example of the hardware configuration of the MFP 900 according to the present embodiment.

The MFP 900 illustrated in FIG. 3 includes a controller 910, a short-range communication circuit 920, an engine controller 930, a control panel 940, and a network I/F 950. The controller 910 includes a CPU 901 as a main processor of a computer, a system memory 902, a north bridge (NB) 903, a south bridge (SB) 904, an application specific integrated circuit (ASIC) 906, a local memory 907 as a storage area, a hard disk drive (HDD) controller 908, and a hard disk (HD) 909 as a storage area. The NB 903 and the ASIC 906 are connected via an accelerated graphics port (AGP) bus 921.

The CPU 901 is a controller that controls the entire operation of the MFP 900. The NB 903 is a bridge that connects the CPU 901 to the system memory 902, the SB 904, and the AGP bus 921. The NB 903 includes a memory controller that controls reading and writing from and to the system memory 902, a peripheral component interconnect (PCI) master, and an AGP target.

The system memory 902 includes a ROM 902a and a RAM 902b. The ROM 902a stores data and program for implementing various functions of the controller 910. The RAM 902b is used to load the program and the data. The RAM 902b is also used as a drawing memory to store drawing data for printing. The program stored in the RAM 902b may be stored in any computer-readable storage (recording) medium, such as a compact disc-read only memory (CD-ROM), compact disc-recordable (CD-R), or digital versatile disc (DVD), in a file format installable or executable by the computer, for distribution.

The SB 904 is a bridge that connects the NB 903 with a PCI device or a peripheral device. The ASIC 906 is an integrated circuit (IC) dedicated to an image processing use and includes a hardware element for image processing. The ASIC 906 is a bridge that connects the AGP bus 921, a PCI bus 922, the HDD controller 908, and the local memory 907 with each other.

The ASIC 906 includes a PCI target, an AGP master, an arbiter (ARB) as a central processor of the ASIC 906, a memory controller to control the local memory 907, a plurality of direct memory access controllers (DMACs) to rotate image data, and a PCI unit. By converting coordinates of the image data with a hardware logic, image data are rotated. The PCI unit transfers data between a scanner unit 931 and a printer unit 932 via the PCI bus 922. The ASIC 906 may be connected to a USB interface, or the Institute of Electrical and Electronics Engineers 1394 (IEEE1394) interface.

The local memory 907 is used as a buffer for image data to be copied or coding. The HD 909 is a storage (memory) that stores various image data, font data for printing, and form data. The HDD controller 908 reads and writes various data from and to the HD 909 under control of the CPU 901. The AGP bus 921 is a bus interface for a graphics accelerator card, which is proposed to accelerate graphics processing. Through directly accessing the system memory 902 by high-throughput, speed of the graphics accelerator card is improved.

Further, the short-range communication circuit 920 is provided with a short-range communication antenna 920a. The short-range communication circuit 920 is a communication circuit in compliance with the near field communication (NFC), BLUETOOTH, and the like.

The engine controller 930 includes the scanner unit 931 and the printer unit 932. The control panel 940 includes a panel display 940a and an operation device 940b. The panel display 940a is, e.g., a touch panel that displays current settings or a selection screen and receives a user input. The operation device 940b includes, e.g., a numeric keypad and a start key. The numeric keypad receives assigned values of image forming parameters such as an image density parameter. The start key receives an instruction to start copying.

The controller 910 controls entire operation of the MFP 900. For example, the controller 910 controls drawing, communication, or user inputs to the control panel 940. The scanner unit 931 or the printer unit 932 includes an image processing unit for, for example, error diffusion and gamma conversion.

Note that, in response to an instruction to select a specific application through the control panel 940 by an application switch key, the MFP 900 sequentially selects document server, coping, printing, and facsimile transmission functions. The MFP 900 enters a document server mode to store document data with selection of the document server function and enters a copy mode with selection of the copy function. Further, the MFP 900 enters a printer mode with selection of the printing function and enters a facsimile mode with selection of the facsimile function.

The network I/F 950 is an interface for data communication using the network 18. The short-range communication circuit 920 and the network I/F 950 are electrically connected to the ASIC 906 through the PCI bus 922.

To enable authentication, by an IC card, of a user to use the MFP 900, the MFP 900 includes a built-in IC card reader. Alternatively, the IC card reader is attached to the MFP 900. The MFP 900 reads identification information unique to the IC card from a radio frequency (RF) tag embedded in the IC card by wireless communication. In another example, the IC card is included in a smart device such as a smartphone. In still another example, the MFP 900 uses any suitable device other than the IC card reader, such as a biometric authentication device (that recognizes fingerprint, palm print, iris, face, etc.) or a barcode reading device.

### Functional Configuration

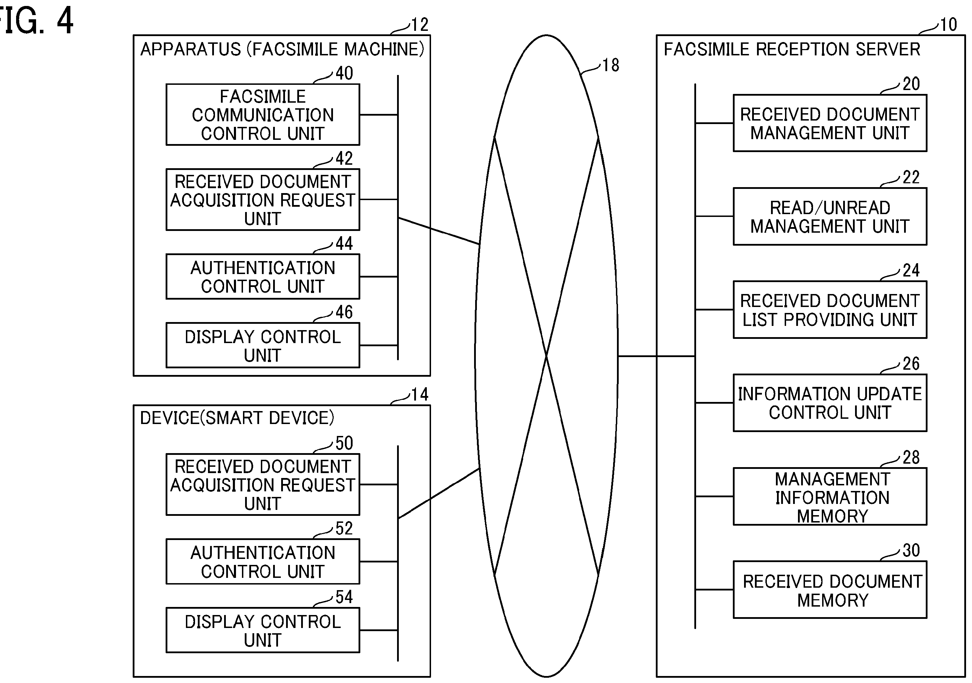

The management system 1 according to the present embodiment has, for example, a functional configuration as illustrated in FIG. 4. FIG. 4 is a schematic diagram illustrating an example of the functional configuration of the management system according to the present embodiment. In the description of the functional configuration of FIG. 4, descriptions of components unnecessary for the description of the present embodiment may be omitted.

The apparatus 12 illustrated in FIG. 4 includes a facsimile communication control unit 40, a received document acquisition request unit 42, an authentication control unit 44, and a display control unit 46. The apparatus 12 (in particular, the CPU 901 illustrated in FIG. 3 when the apparatus 12 is implemented by the MFP 900) executes a program to implement, for example, the functional units illustrated in FIG. 4.

The facsimile communication control unit 40 transmits and receives a facsimile document using a facsimile communication protocol. The received document acquisition request unit 42 requests acquisition of a received document or a list of received documents stored in the facsimile reception server 10 from the facsimile reception server 10. Thus, the received document acquisition request unit 42 acquires the received document or the received document list (an example of received document list information) from the facsimile reception server 10. The authentication control unit 44 controls processing relating to authentication. The display control unit 46 displays the received document list or the received document on the control panel 940.

The device 14 illustrated in FIG. 4 includes a received document acquisition request unit 50, an authentication control unit 52, and a display control unit 54. The device 14 (in particular, the CPU 501 illustrated in FIG. 2 when the device 14 is implemented by the computer 500) executes a program to implement, for example, the functional units illustrated in FIG. 4.

The received document acquisition request unit 50 requests acquisition of a received document or a list of received documents stored in the facsimile reception server 10 from the facsimile reception server 10. Thus, the received document acquisition request unit 50 acquires the received document or the received document list from the facsimile reception server 10. The authentication control unit 52 controls processing relating to authentication. The display control unit 54 displays the received document list or the received document on the display 506.

As described above, in the example of the management system 1 illustrates in FIG. 4, the apparatus 12 or the device 14 acquires the received document or the list of received documents stored in the facsimile reception server 10 and displays or prints the received document or the received document list, to allow the user to view the received document. The management system 1 may allow either one of the apparatuses 12 and the device 14 to view the received document stored in the facsimile reception server 10.

The facsimile reception server 10 illustrated in FIG. 4 includes a received document management unit 20, a read/unread management unit 22, a received document list providing unit 24, an information update control unit 26, a management information memory 28, and a received document memory 30. The facsimile reception server 10 (in particular, the CPU 501 illustrated in FIG. 2 when the facsimile reception server 10 is implemented by the computer 500) executes a program to implement, for example, the functional units illustrated in FIG. 4.

The received document management unit 20 receives, from the sender apparatus 12, a facsimile document addressed to the apparatus 12 of an organization, and stores the facsimile document (received document). The read/unread management unit 22 manages (controls) read/unread status of the received document stored in the facsimile reception server 10 as described later. The received document list providing unit 24 transmits, to the request source, the received document list or the received document based on the request of acquisition thereof from the apparatus 12 or the device 14. The information update control unit 26 updates management information stored in the management information memory 28. The management information memory 28 stores various information used for processing performed by the facsimile reception server 10. The received document memory 30 stores a received document that is faxed from the sender apparatus 12 to the receiver apparatus 12 (e.g., the apparatus 12 owned by an organization). When the facsimile reception server 10 is implemented by the computer 500 illustrated in FIG. 2, the management information memory 28 and the received document memory 30 are implemented by, for example, the ROM 502 illustrated in FIG. 2.

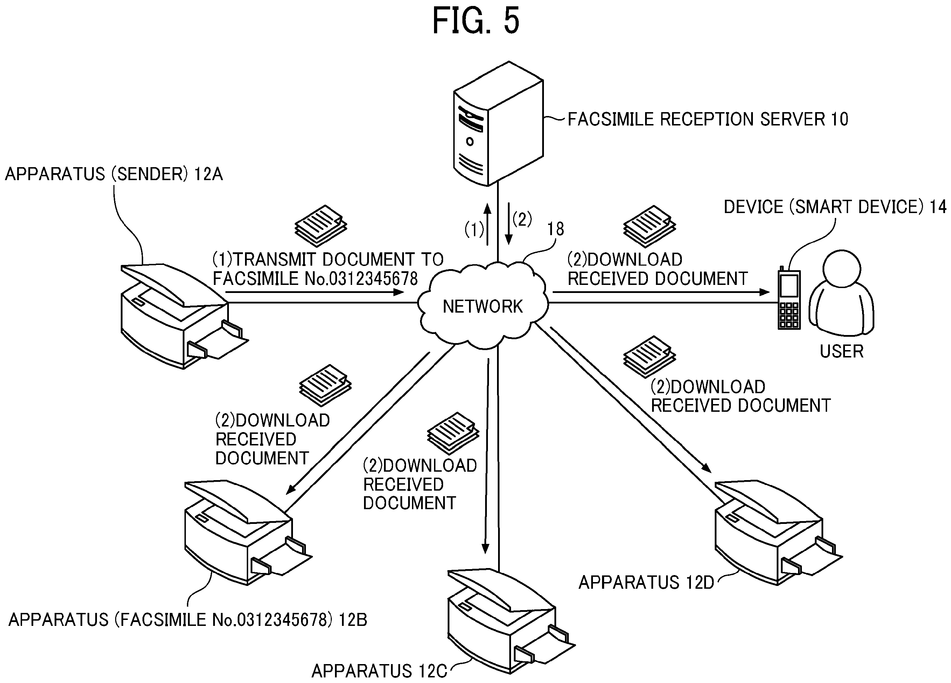

A description is given of facsimile transmission and reception by the management system 1 according to the present embodiment. FIG. 5 is a diagram illustrating an example of facsimile transmission and reception in the management system 1 according to the present embodiment. FIG. 5 illustrates an example in which the apparatus 12A is a sender (sender apparatus) of a facsimile document and the apparatus 12B is a receiver (receiver apparatus) of the facsimile document.

To transmit a facsimile document to the receiver apparatus 12B, the sender apparatus 12B transmits the facsimile document to the facsimile reception server 10, designating the facsimile number "0312345678" of the receiver apparatus 12B as the receiver number. The receiver apparatus 12B of the facsimile document can access the facsimile reception server 10 and acquire the facsimile document (received document) from the facsimile reception server 10.

In the management system 1 according to the present embodiment, in addition to the receiver apparatus 12B, any of the apparatuses 12C and 12D and the device 14 accessible (permitted to access) to the facsimile reception server 10 can acquire (download) the received documents stored in the facsimile reception server 10 for the user to view the documents. Note that, hereinafter the "received document" may be simply referred to as a "document" for simplicity.

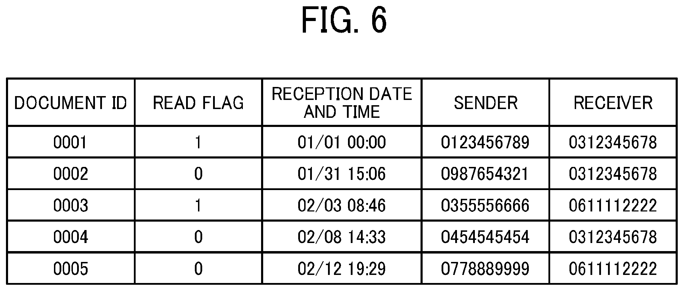

The facsimile reception server 10 stores the document received from the sender apparatus 12A in the received document memory 30, and manages read/unread status of the received document using, for example, a received document table (received document list in a table format) as illustrated in FIG. 6. FIG. 6 illustrates an example of the received document table according to the present embodiment. The received document table of FIG. 6 is stored in, for example, the management information memory 28.

The received document table illustrated in FIG. 6 includes a document identifier (ID), a read flag, a reception date and time, a sender, and a receiver as data items. The document ID is an example of identification information of the received document. The read flag is an example of information indicating an unread status or a read status of the received document. In FIG. 6, "0" represents an unread status, and "1" represents a read status.

The sender is represented by the facsimile number of the sender of the received document. The receiver is represented by the facsimile number of the receiver of the received document. The read/unread management unit 22 of the facsimile reception server 10 manages read/unread status of the stored received document, using the received document table of FIG. 6.

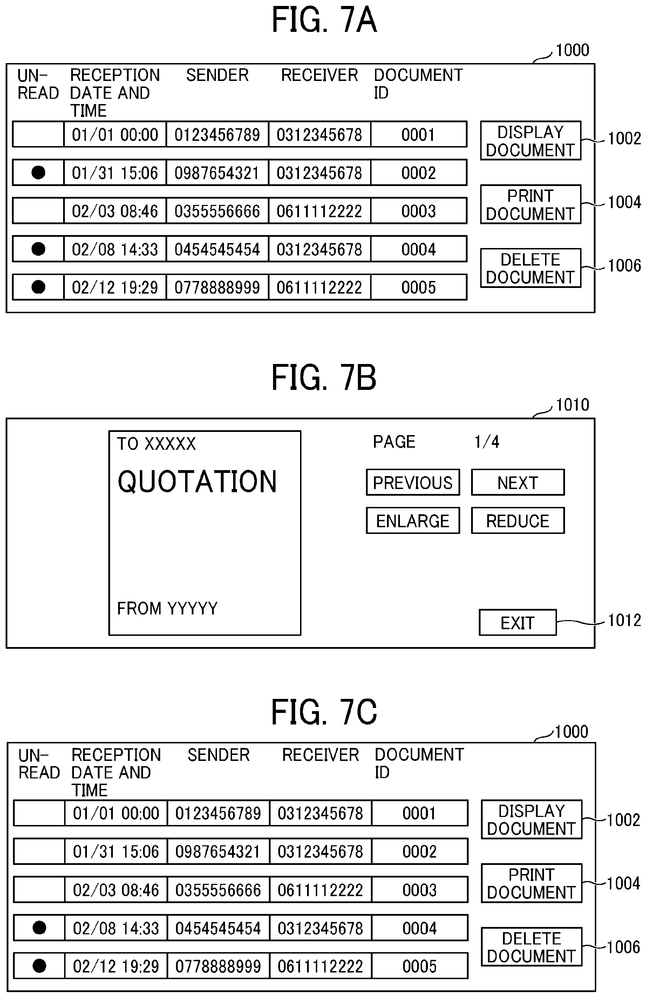

For example, when the receiver apparatus 12B having the facsimile number "0312345678" acquires the received document list of FIG. 6 from the facsimile reception server 10, the control panel 940 (illustrated in FIG. 3) displays a screen 1000 illustrated in FIG. 7A. FIGS. 7A, 7B, and 7C illustrate an example of screen transition on the control panel 940 (illustrated in FIG. 3) of the receiver apparatus.

On the screen 1000, based on the received document table of FIG. 6, the data item "unread" of the second, fourth, and fifth documents (assigned with document IDs "0002," "00004," and "0005") from the top are marked with black solid circles representing an unread status. On the screen 1000, no black solid circles (representing the unread status) are in the data item "unread" of the first and third documents from the top (assigned with the document IDs "0001" and "0003"). The blank data item "unread" represents the read status.

The screen 1000 includes a display document button 1002, a print document button 1004, and a delete document button 1006. When the user operating the receiver apparatus 12B selects, from the received document list, a received document to be viewed and presses a display document button 1002, the selected document is acquired from the facsimile reception server 10 and displayed on the control panel 940.

When the user operating the receiver apparatus 12B selects, from the received document list, a received document to be viewed and presses the print document button 1004, the selected document is acquired from the facsimile reception server 10 and is printed. When the user operating the receiver apparatus 12B selects, from the received document list, a received document and presses the delete document button 1006, the selected document is deleted from the facsimile reception server 10.

Referring to FIGS. 7A to 7C, a description is given below of an examples in which the user operating the receiver apparatus 12B selects, from the received document list, the document having the document ID "0002" and presses the display document button 1002 on the screen 1000. The receiver apparatus 12B requests acquisition of the document having the document ID "0002" from the facsimile reception server 10, and acquires the document having the document ID "0002." The receiver apparatus 12B displays, for example, a screen 1010 illustrated in FIG. 7B on the control panel 940.

The screen 1010 is an example in which an image of the document having the document ID "0002" selected by the user is displayed. The screen 1010 includes an exit button 1012 for ending the display of the selected document. The user operating the receiver apparatus 12B presses the exit button 1012 to end the display of the image of the selected document. Since the receiver number of the document having the document ID "0002" displayed on the screen 1010 is "0312345678," the receiver is the apparatus 12B.

Therefore, the read/unread management unit 22 of the facsimile reception server 10 determines that the document having the document ID "0002" has been viewed on the receiver apparatus 12B. Then, regarding the document ID "0002" in FIG. 6, the read/unread management unit 22 switches the data item "read flag" from "0" representing unread to "1" representing read. In addition, on the screen 1000 of FIG. 7C changed from the screen 1010, the data item "unread" of the second document from the top (the document having the document ID "0002") is changed from the solid circle representing the unread status to blank representing the read status.

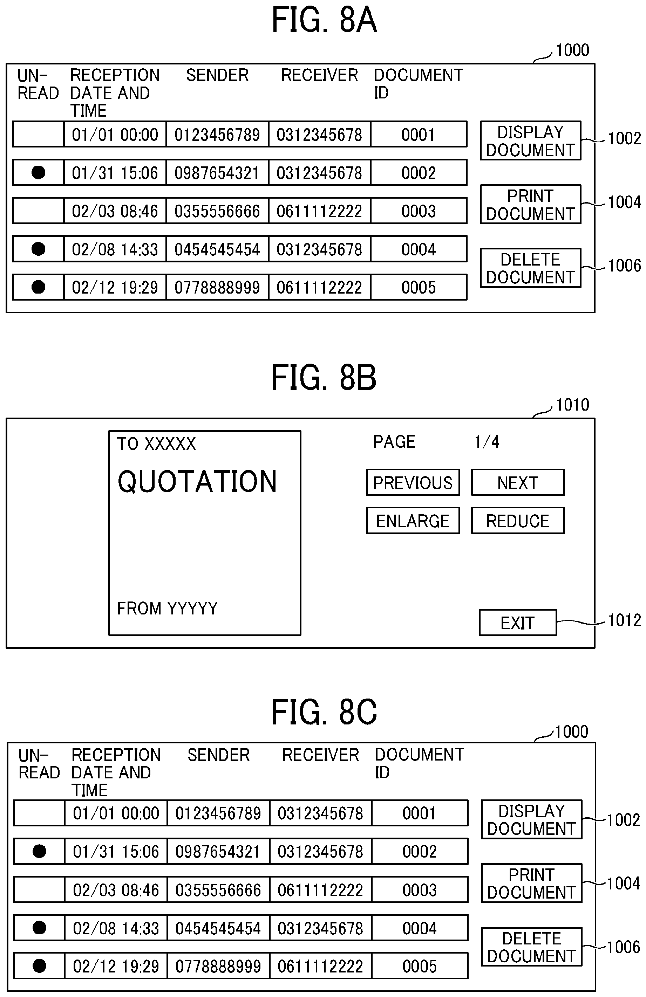

For example, when the apparatus 12 other than the receiver apparatus 12B having the facsimile number "0312345678" acquires the received document list illustrated in FIG. 6 from the facsimile reception server 10, the control panel 940 displays the screen 1000 illustrated in FIG. 8A, which is the same as the screen 1000 illustrated in FIG. 7A. FIGS. 8A, 7B, and 8C illustrate an example of screen transition on the control panel 940 (illustrated in FIG. 3) of the receiver apparatus.

On the screen 1000, based on the received document table of FIG. 6, the data item "unread" of the second, fourth, and fifth documents (assigned with document IDs "0002," "00004," and "0005") from the top are marked with black solid circles representing an unread status.

Referring to FIGS. 8A to 8C, a description is given below of an examples in which the user operating the apparatus 12 other than the receiver apparatus 12B selects the document having the document ID "0002" from the received document list and presses the display document button 1002 on the screen 1000. The apparatus 12 other than the receiver apparatus 12B requests acquisition of the document having the document ID "0002" from the facsimile reception server 10, and acquires the document having the document ID "0002." The apparatus 12 other than the receiver apparatus 12B displays, for example, the screen 1010 as illustrated in FIG. 8B on the control panel 940.

The screen 1010 is an example in which an image of the document having the document ID "0002" selected by the user is displayed. The user operating the apparatus 12 other than the receiver apparatus 12B presses the exit button 1012 to end the display of the image of the selected document. Since the receiver number of the document having the document ID "0002" displayed on the screen 1010 is "0312345678," the receiver is the apparatus 12B.

Therefore, the read/unread management unit 22 of the facsimile reception server 10 determines that the document having the document ID "0002" is viewed not on the receiver apparatus 12B but on the apparatus 12 other than the receiver apparatus 12B. Then, the read/unread management unit 22 maintains "0" representing unread in the data item "read flag" of the document ID "0002" in FIG. 6. In addition, on the screen 1000 of FIG. 8C changed from the screen 1010, the data item "unread" of the second document from the top (the document having the document ID "0002") remains the solid circle indicating the unread status.

Although FIGS. 8A to 8C illustrates an example of screen transition when the apparatus 12 other than the receiver apparatus 12B acquires the received document list of FIG. 6 from the facsimile reception server 10, the same applies to the device 14 except for the screen layout.

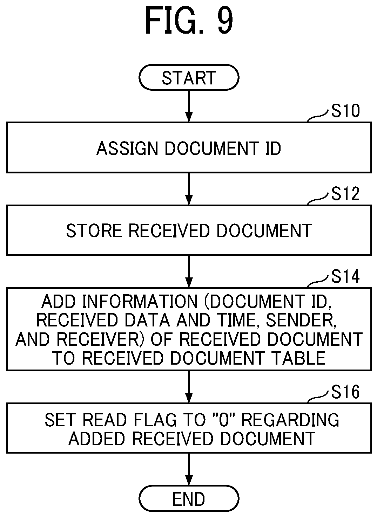

FIG. 9 is a flowchart illustrating an example of operation performed by the facsimile reception server that has received a facsimile document according to the present embodiment. In step S10, the received document management unit 20 of the facsimile reception server 10 assigns a document ID to the received facsimile document. In step S12, the received document management unit 20 records (stores) the facsimile document assigned with the document ID as a received document in the received document memory 30 (a memory). Note that, the received document memory 30 may be provided in another server with which the facsimile reception server 10 performs data communication.

In step S14, the received document management unit 20 adds a record of information (document ID, reception date and time, sender, and receiver) of the received document stored in step S12 to the received document table as illustrated in FIG. 6. In step S16, the received document management unit 20 sets the read flag to "0" representing unread in the record (received document information) added in step S14.

As illustrated in FIG. 9, when adding a record of a received document to the received document table illustrated in FIG. 6, the facsimile reception server 10 that has received the facsimile document sets the read flag of the record to "0" representing unread.

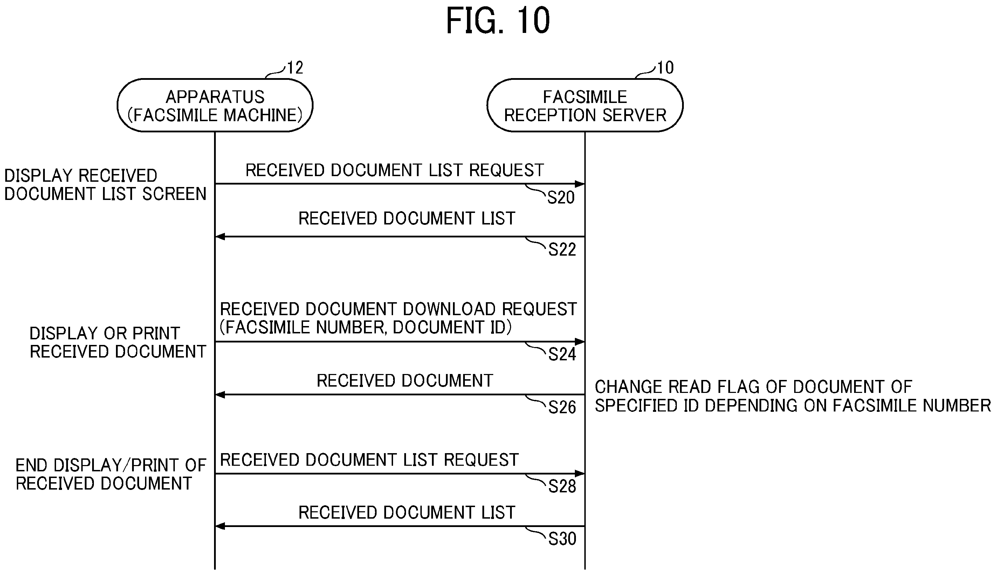

FIG. 10 is a sequence diagram illustrating an example of a process in which a user acquires, with the apparatus (e.g., a facsimile machine), a received document stored in the facsimile reception server and views the document. FIG. 10 illustrates an example in which the user operating the apparatus 12 views the received document by displaying or printing the received document.

In step S20, for example, the received document acquisition request unit 42 of the apparatus 12 that has received the operation, by the user, of displaying the received document list screen 1000 requests the received document list, such as the received document table illustrated FIG. 6, from the facsimile reception server 10. The received document list providing unit 24 of the facsimile reception server 10 proceeds to step S22 and transmits, to the apparatus 12 of the request source, a received document list (received document list information) based on the received document list request from the apparatus 12. The display control unit 46 of the apparatus 12 displays, for example, the screen 1000 illustrated in FIG. 7A on the control panel 940 based on the received document list thus received.

For example, the user operating the apparatus 12 selects a received document to be viewed from the received document list of FIG. 7A and presses the display document button 1002. With this operation, the user requests download of the received document from the facsimile reception server 10, specifying the document ID of the selected document and the facsimile number of the apparatus 12 as the request source. The user operating the apparatus 12 selects a received document to be viewed from the received document list of FIG. 7A and presses the print document button 1004. Thus, the user requests printing of the received document from the facsimile reception server 10, specifying the document ID of the selected document and the facsimile number of the apparatus 12 as the request source.

In step S26, the received document list providing unit 24 of the facsimile reception server 10 transmits, to the apparatus 12 that has made the download request, the document having the specified document ID, based on the download request of the document from the apparatus 12 made in step S24. The read/unread management unit 22 of the facsimile reception server 10 controls the read/unread status of the received document thus sent.

More specifically, the read/unread management unit 22 determines whether the facsimile number of the request source apparatus 12 specified in step S24 matches the facsimile number of the receiver of the document sent in step S26. Determining that the request source facsimile number matches the receiver facsimile number, the read/unread management unit 22 determines that the user who should view the received document has viewed the received document, and switches the data item "read flag" to "1" representing read in the corresponding record in the received document list in FIG. 6.

By contrast, determining that the facsimile number of the request source apparatus 12 specified in step S24 does not match the facsimile number of the receiver of the document sent in step S26, the read/unread management unit 22 determines that the received document has not been viewed by the user who should view the received document, and maintains "0" representing unread in the data item "read flag" of the corresponding record in the received document list in FIG. 6.

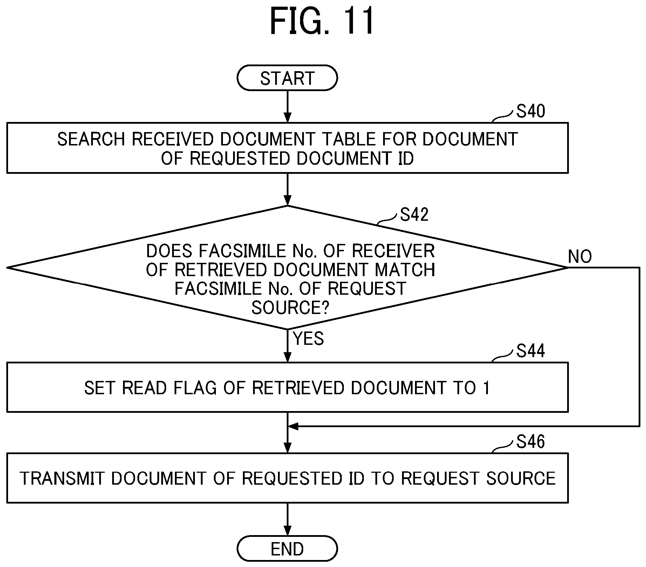

The read/unread management unit 22 executes the read management, for example, in the procedure illustrated in FIG. 11. FIG. 11 is a flowchart illustrating an example of operation performed by the facsimile reception server that has received a download request of a received document, according to the present embodiment. In the description with reference to the flowchart of FIG. 11, the request source apparatus 12 is given a facsimile number "XXXXX," and the received document requested to be downloaded is given a document ID "Id."

In step S40, the received document list providing unit 24 of the facsimile reception server 10 searches the received document table illustrated in FIG. 6 for a record (received document information) including the document ID "Id" of the requested document. In step S42, the read/unread management unit 22 determines whether or not the facsimile number (receiver facsimile number) set in the data item "receiver" of the received document information retrieved in step S40 matches the number "XXXXX."

Based on the determination of match, the read/unread management unit 22 proceeds to step S44, and switches the data item "read flag" to "1" representing read in the record (received document information) including the document ID "Id" retrieved in step S40. By contrast, based on the determination of not match, the read/unread management unit 22 skips the process of step S44 and does not switch the data item "read flag" of the record (received document information) of the document ID "Id" retrieved in step S40 to "1" representing read.

In step S46, the received document list providing unit 24 retrieves the document having the document ID "Id" from the received document memory 30, and transmits the document to the download request source apparatus 12. As a result, in the management system 1 according to the present embodiment, when the received document marked as unread is viewed by the apparatus 12 other than the receiver apparatus 12, the received document is kept in the unread status.

Returning to FIG. 10, for example, when the exit button 1012 on the screen 1010 of FIG. 7B is pressed by the user, in step S28, the received document acquisition request unit 42 of the apparatus 12 requests the received document list from the facsimile reception server 10.

The received document list providing unit 24 of the facsimile reception server 10 proceeds to step S30, and transmits, to the apparatus 12 of the request source, the received document list information based on the received document list request from the apparatus 12. Based on the received document list information thus received, the display control unit 46 of the apparatus 12 displays, on the control panel 940, the screen 1000 in FIG. 7C presenting the received document list in which the unread status has been changed to the read status in response to, for example, transmission of the document in step S26.

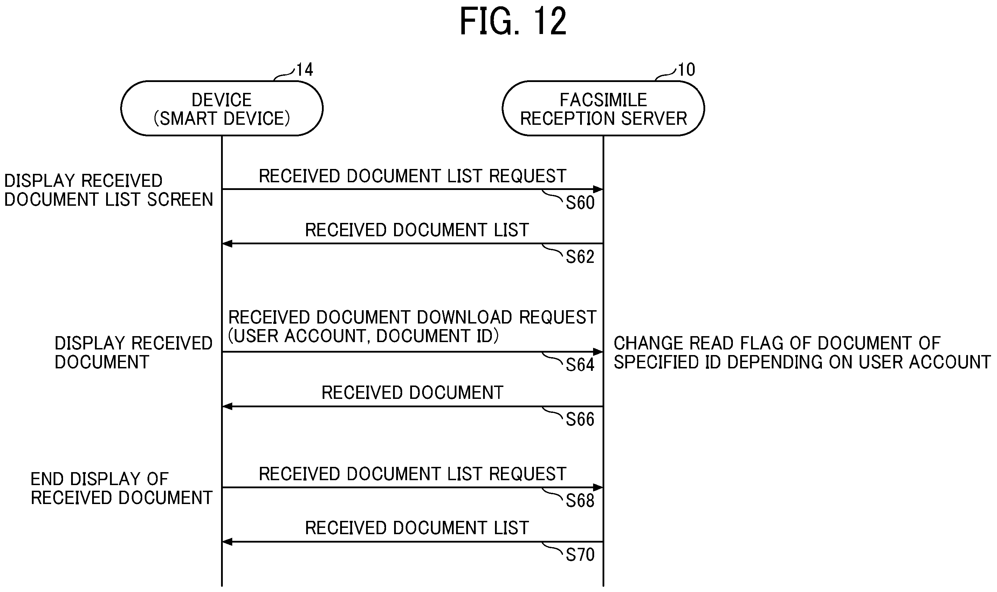

FIG. 12 is a sequence diagram illustrating an example of a process in which a user acquires, with the device 14 (e.g., a smart device), a received document stored in the facsimile reception server 10 and views the document. FIG. 12 illustrates an example in which the user operating the device 14 views the received document by displaying the document.

In step S60, for example, the received document acquisition request unit 50 of the device 14 that has received the operation, by the user, of displaying the received document list screen 1000 requests the received document list, such as the received document table illustrated FIG. 6, from the facsimile reception server 10. The received document list providing unit 24 of the facsimile reception server 10 proceeds to step S62, and transmits, to the device 14 of the request source, the received document list information based on the received document list request from the device 14. The display control unit 54 of the device 14 displays a screen including the received document list on the display 506 based on the received document list information thus received.

For example, the user operating the device 14 selects a received document to be viewed from the received document list and performs an operation of downloading the document. With this operation, the user requests download of the received document from the facsimile reception server 10, specifying the document ID of the selected document and the user account of the user who is operating the device 14. That is, the download request (i.e., acquisition request) includes the document ID and user information that is the user account, in this example.

In step S66, the received document list providing unit 24 of the facsimile reception server 10 transmits, to the device 14 that has made the download request, the document having the specified document ID, based on the download request of the document from the device 14 made in step S64. The read/unread management unit 22 of the facsimile reception server 10 controls the read/unread status of the received document thus sent.

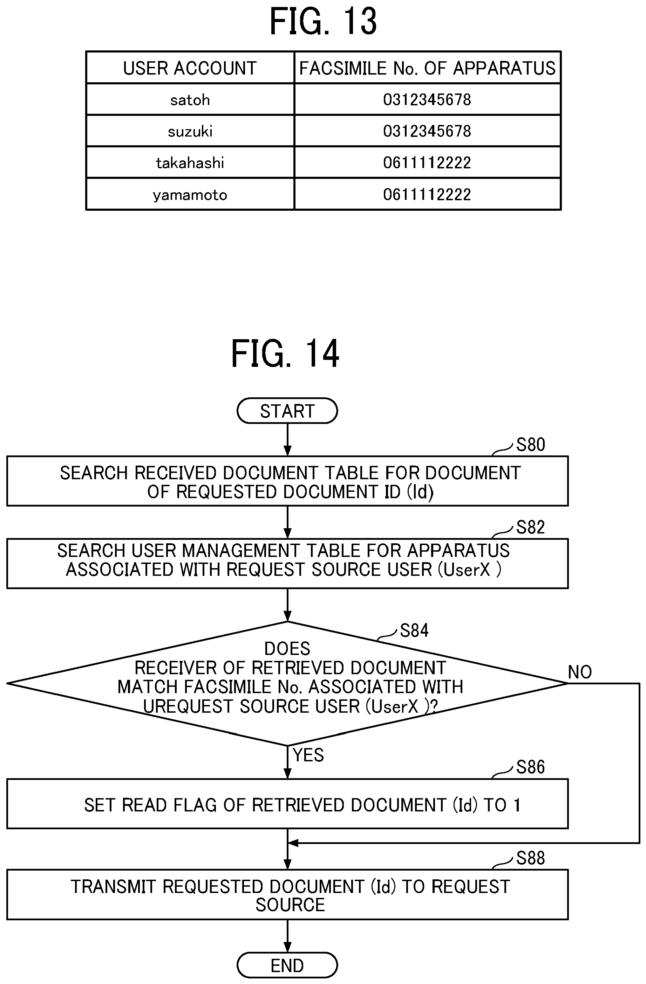

More specifically, the user account is associated with the facsimile number of the apparatus 12 in a user management table (association information) such as that illustrated in FIG. 13. The read/unread management unit 22 determines whether the facsimile number associated with the user account specified in step S64 matches the facsimile number of the receiver of the document sent in step S66. Determining that the facsimile number associated with the user account matches the receiver facsimile number, the read/unread management unit 22 determines that the user who should view the received document has viewed the received document. The read/unread management unit 22 switches the data item "read flag" (data item) to "1" representing read in the record corresponding to the document transmit in S66, in the received document list in FIG. 6.

FIG. 13 illustrates an example of the user management table. The user management table illustrated in FIG. 13 includes, as data items, the user account, and the facsimile number of the apparatus. The user account is an example of identification information identifying a user. The facsimile number of the apparatus is an example of identification information identifying the apparatus 12 associated with the user identified by the user account. The user management table of FIG. 13 may be stored in the management information memory 28 of the facsimile reception server 10 or may be stored in the device 14. When the received document is stored in the device 14, the information designated by the download request of the received document in the step S64 is the same as that in the step S24 in FIG. 10. Accordingly, the process after step S64 is the same as the process after step S24 in FIG. 10.

Determining that the facsimile number of the apparatus 12 associated with the user account (in the user management table illustrated in FIG. 13) specified in step S64 does not match the facsimile number of the receiver of the document sent in step S66, the read/unread management unit 22 determines that the user who should view the received document has not yet viewed the received document. The read/unread management unit 22 does not switch the value of the data item "read flag" (data item) in the record corresponding to the document transmit in S66, in the received document list illustrated in FIG. 6.

The read/unread management unit 22 executes the read management, for example, in the procedure illustrated in FIG. 14. FIG. 14 is a flowchart illustrating an example of operation performed by the facsimile reception server that has received a download request of a received document, according to the present embodiment. In the description referring to the flowchart of FIG. 14, "UserX" represents the user account of the user who is performing the request operation on the apparatus 12 (the user of the request source), and "Id" represents the document ID of the received document requested to be downloaded.

In step S80, the received document list providing unit 24 of the facsimile reception server 10 searches the received document table illustrated in FIG. 6 for a record (received document information) including the document ID "Id" of the requested document. In step S82, the received document list providing unit 24 searches the user management table such as that illustrated in FIG. 13 for the facsimile number of the apparatus 12 associated with the user account "UserX."

In step S84, the read/unread management unit 22 determines whether or not the facsimile number (receiver facsimile number) set in the data item "receiver" of the received document information retrieved in step S80 matches the facsimile number of the apparatus 12 associated with the user account "UserX" retrieved in step S82.

Based on the determination of match, the read/unread management unit 22 proceeds to step S86, and switches the data item "read flag" to "1" representing read in the record (received document information) including the document ID "Id" retrieved in step S80. By contrast, based on the determination of not match, the read/unread management unit 22 skips the process of step S86 and does not switch the data item "read flag" of the record (received document information) of the document ID "Id" retrieved in step S80 to "1" representing read.

In step S88, the received document list providing unit 24 retrieves the document having the document ID "Id" from the received document memory 30, and transmits the document to the download request source device 14. As a result, in the management system 1 according to the present embodiment, when the received document marked as unread is viewed by the device 14 (e.g., a smart device) other than the receiver apparatus 12, the received document is kept in the unread status.

Returning to FIG. 12, when the user performs an operation of ending the display of the received document, in step S68, the received document acquisition request unit 50 of the device 14 requests the received document list from the facsimile reception server 10.

The received document list providing unit 24 of the facsimile reception server 10 proceeds to step S70, and transmits, to the request source device 14, the received document list based on the received document list request from the device 14. Based on the received document list information thus received, the display control unit 54 of the device 14 displays, on the display 506, a document list screen presenting the received document information. On the document list screen, the unread status has been changed to the read status in response to, for example, transmission of the document in step S66.

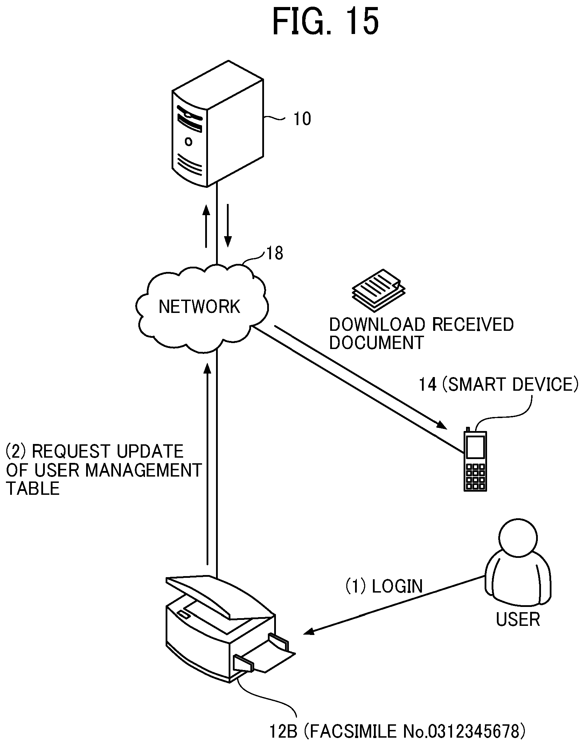

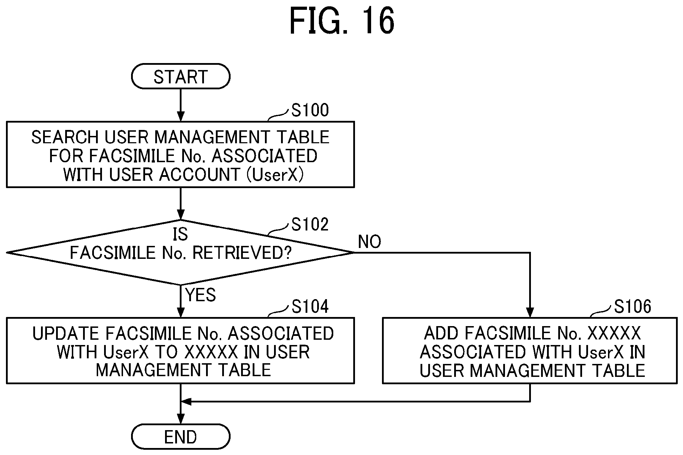

The user management table illustrated in FIG. 13 may be automatically updated by the procedure illustrated in FIGS. 15 and 16, for example. FIG. 15 is a diagram illustrating an example of a process of updating the user management table, performed by the facsimile reception server 10.

For example, (1) when the user has successfully logged in, (2) the authentication control unit 52 of the apparatus 12 having the facsimile number "0312345678" makes an update request for the user management table, specifying the user account of the logged-in user and the facsimile number "0312345678" of the apparatus 12.

Receiving the update request for the user management table, the information update control unit 26 of the facsimile reception server 10 registers the user account and the facsimile number (specified by the update request from the apparatus 12) in association with each other in the user management table illustrated in FIG. 13, for example, according to the procedure illustrated in FIG. 16.

FIG. 16 illustrates an example of a process of updating the user management table, performed by the facsimile reception server 10. In the description referring to the flowchart illustrated in FIG. 16, the logged-in user is given the user account "UserX," and the apparatus 12 in which the user "UserX" logs in is given the facsimile number "XXXXX."

In step S100, the information update control unit 26 of the facsimile reception server 10 searches the user management table for the facsimile number of the apparatus 12 corresponding to the user account "UserX."

In response to retrieval of the facsimile number of the apparatus 12 corresponding to user account "UserX" in the search (Yes in S102), in S104, the information update control unit 26 updates the value of the data item "facsimile number of apparatus" corresponding to the user account "UserX" to the number "XXXXX."

When the facsimile number of the apparatus 12 corresponding to user account "UserX" is not retrieved in the search (No in S102), in S106, the information update control unit 26 adds a record in which the user account "UserX" is associated with the number "XXXXX" to the user management table.

Referring back to FIG. 15, after the user logs in to the apparatus 12 having the facsimile number "0312345678," the facsimile reception server 10 stores the user account of the logged-in user in association with the apparatus 12 in which the user has logged in the user management table. Assume that the user views the received document stored in the facsimile reception server 10 from the device 14 such as the smart device, specifying the user account. In this case, when the receiver of the document is the apparatus 12 having the facsimile number "0312345678," the facsimile reception server 10 changes the status of the document from unread to read based on the user management table illustrated in FIG. 13.

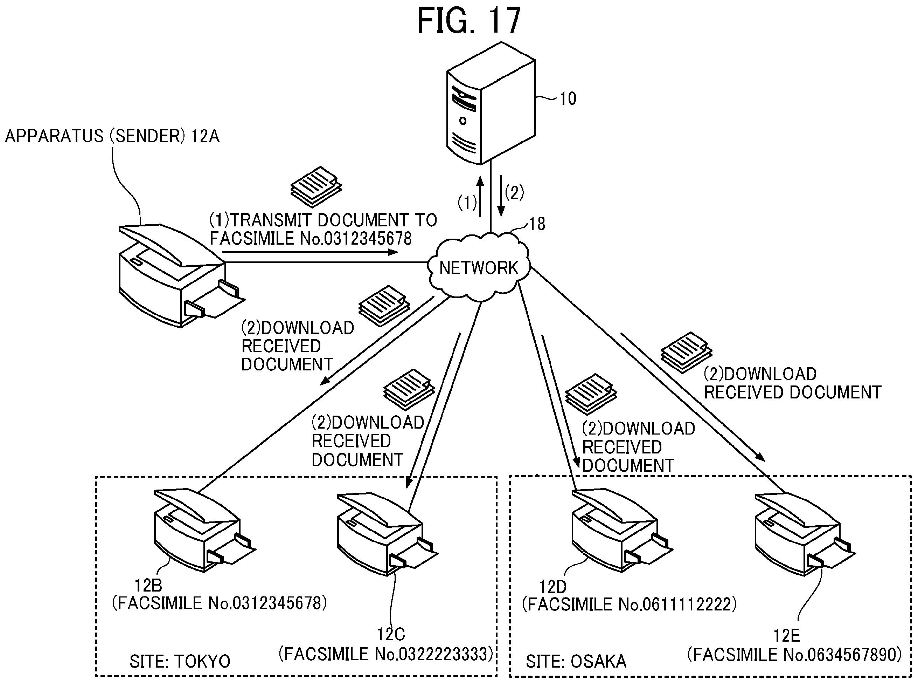

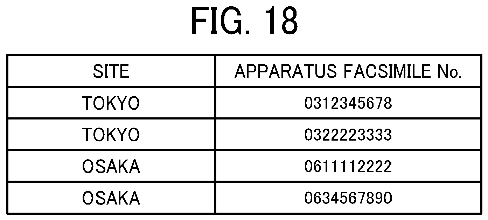

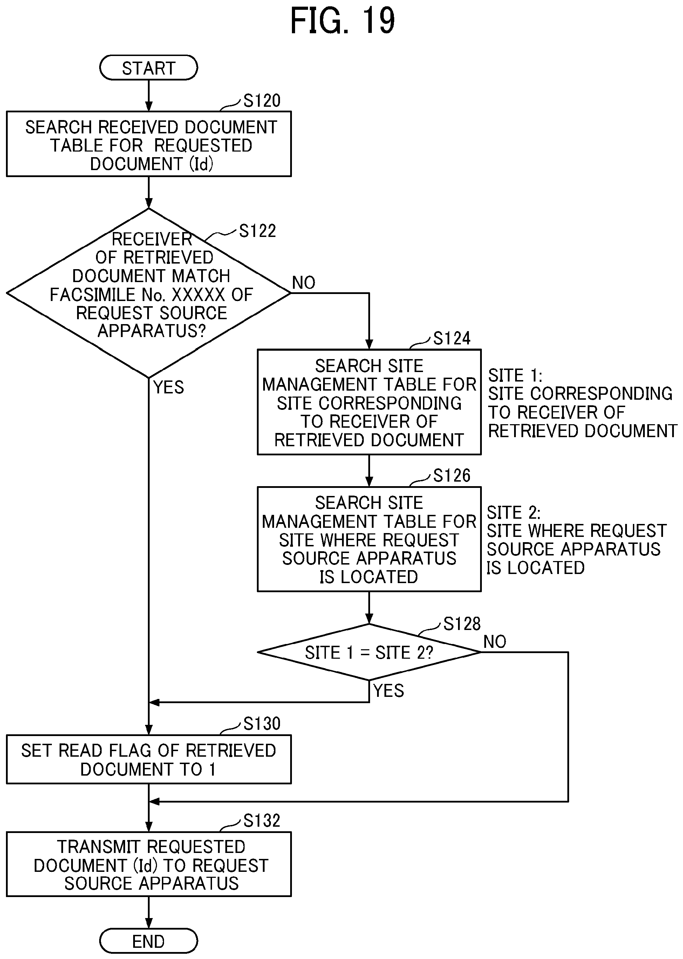

Alternatively, the read/unread management unit 22 of the facsimile reception server 10 may control the read/unread status of the document as described with reference to FIGS. 17 to 19. FIG. 17 is an example of facsimile transmission and reception in the management system according to the present embodiment. FIG. 18 illustrates an example of a site management table. FIG. 19 is a flowchart illustrating an example of process performed by the facsimile reception server that has received a download request for a received document.

In the example illustrated in FIG. 17, the apparatus 12B having the facsimile number "0312345678" and the apparatus 12C having the facsimile number "0322223333" belong to the same site (Tokyo). The apparatus 12D having the facsimile number "0611112222" and an apparatus 12E having the facsimile number "0634567890" belong to the same site (Osaka).

The sender apparatus 12A transmits the facsimile document to the facsimile reception server 10, specifying the facsimile number "0312345678" of the apparatus 12B as a receiver number. The receiver apparatus 12B of the facsimile document can access the facsimile reception server 10 and acquire the facsimile document (received document) from the facsimile reception server 10.

It is assumed that each of the apparatuses 12B to 12E in FIG. 17 has access to the facsimile reception server 10. In the case illustrated in FIG. 17, the status of the document addressed to the facsimile number "0312345678," stored in the facsimile reception server 10, is changed to read when the document is downloaded to the receiver apparatus 12B having the facsimile number "0312345678."

In the case illustrated in FIG. 17, the status of the document addressed to the facsimile number "0312345678," stored in the facsimile reception server 10, is also changed to read when the document is downloaded to the apparatus 12C on the same site to which the apparatus 12B having the facsimile number "0312345678" belongs.

On the other hand, in the case illustrated in FIG. 17, the status of the document addressed to the facsimile number "0312345678," stored in the facsimile reception server 10, is not changed to read when the document is downloaded to the apparatus 12D or 12E not belonging to the same site where the apparatus 12B having the facsimile number "0312345678" belongs.

Using the site management table illustrated in FIG. 18, the read/unread management unit 22 determines whether or not the site of the receiver of the document to be downloaded matches the site to which the apparatus 12 that downloads the document belongs. The site management table illustrated in FIG. 18 is an example in which the facsimile number is used as the information identifying the apparatus 12. The information identifying the apparatus 12 is not limited thereto but may be any information, such as an internet protocol (IP) address or an identifier (ID) unique to the apparatus 12.

The read management process by the read/unread management unit 22 is executed, for example, in the procedure s illustrated in FIG. 19. In the description with reference to the flowchart of FIG. 19, the request source apparatus 12 is given the facsimile number "XXXXX," and the received document requested to be downloaded is given the document ID "Id."

In step S120, the received document list providing unit 24 of the facsimile reception server 10 searches the received document table (e.g., illustrated in FIG. 6) for a record (received document information) including the document ID "Id". In step S122, the read/unread management unit 22 determines whether or not the facsimile number (receiver facsimile number) in the data item "receiver" of the received document information retrieved in step S120 matches the number "XXXXX."

Based on the determination of match, the read/unread management unit 22 proceeds to step S130, and sets the data item "read flag" to "1" representing read in the record (received document information) including the document ID "Id" retrieved in step S120.

By contrast, based on the determination of not match, the read/unread management unit 22 proceeds to step S124, and searches for a site corresponding to the receiver in the received document information retrieved in step S120 using the site management table illustrated in FIG. 18. The site corresponding to the receiver is referred to as "Site 1".

In step S126, the read/unread management unit 22 searches for a site corresponding to the number "XXXXX" using the site management table illustrated in FIG. 18. The site corresponding to the number "XXXXX" is referred to as "Site 2." In step S218, the read/unread management unit 22 determines whether Site 1 matches Site 2.

Based on the determination of match, the read/unread management unit 22 proceeds to step S130, and sets the data item "read flag" to "1" representing read in the record (received document information) including the document ID "Id" retrieved in step S120. By contrast, based on the determination of not match, the read/unread management unit 22 skips the process of step S130 and does not sets the data item "read flag" of the received document information of the document ID "Id" retrieved in step S120 to "1" representing read.

In step S132, the received document list providing unit 24 reads out the document having the document ID "Id" from the received document memory 30, and transmits the document to the download request source apparatus 12. As a result, in the management system 1 according to the present embodiment, the status of the received document marked as unread is changed to read also when the document is viewed by the apparatus 12 that is not the receiver apparatus 12 but belongs to the same sate to which receiver apparatus 12 belongs.

As described above, according to the present embodiment, the management system 1 permits a device other than the receiver apparatus 12 to view (acquire) the received document and appropriately manages the read/unread status of the document.

### Second Embodiment:

A description is given of a second embodiment. In the second embodiment, in a case where a user who should view a received document (stored in the facsimile reception server 10) has viewed the document by the apparatus 12 other than the receiver apparatus 12, the facsimile reception server 10 changes the read/unread states of the document to read. In the description of the second embodiment below, descriptions of the configuration same as that of the first embodiment are omitted.

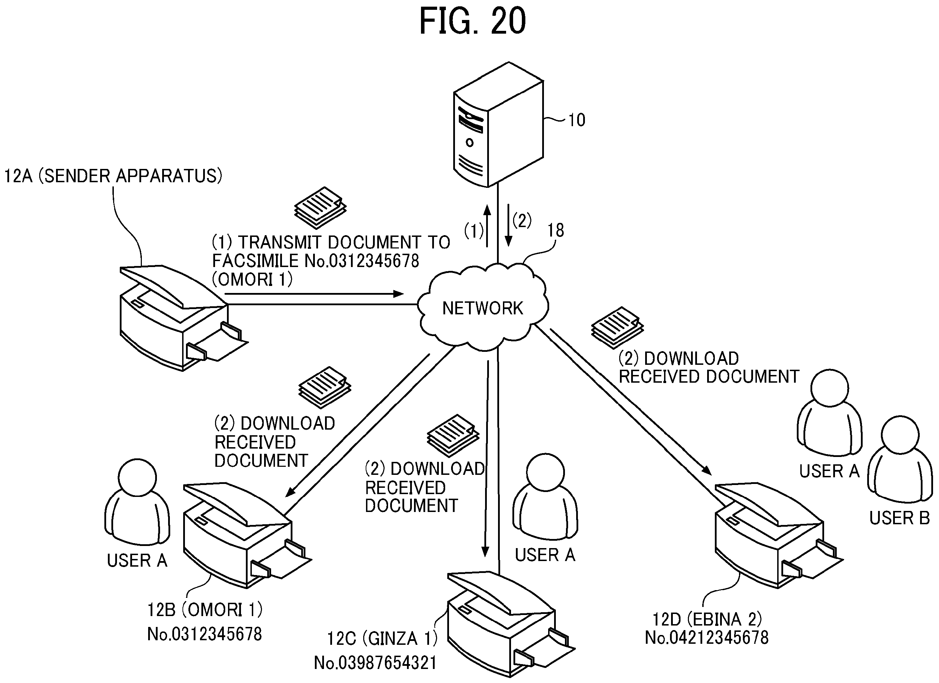

FIG. 20 is an example of facsimile transmission and reception in the management system according to the present embodiment. FIG. 20 illustrates, as examples of the apparatus and the device that can acquire the received document, the apparatus 12B having the facsimile number "0312345678," the apparatus 12C having the facsimile number "03987664321," and the apparatus 12D having the facsimile number "04212345678."

The sender apparatus 12A transmits the facsimile document to the facsimile reception server 10, specifying the facsimile number "0312345678" of the apparatus 12B as a receiver number. The receiver apparatus 12B of the facsimile document can access the facsimile reception server 10 and acquire the facsimile document (received document) from the facsimile reception server 10.

In addition, the apparatuses 12C and 12D in FIG. 20 can access the facsimile reception server 10 and acquire the document addressed to the facsimile number "0312345678" from the facsimile reception server 10.

In the case of FIG. 20, the facsimile reception server 10 determines whether to change the read/unread status of the document addressed to the facsimile number "0312345678" from the unread status to the read status based on the facsimile number of the apparatus 12 accessing the facsimile reception server 10, the organization to which the accessing user belongs, and the owner organization to which the accessing apparatus 12 belongs.

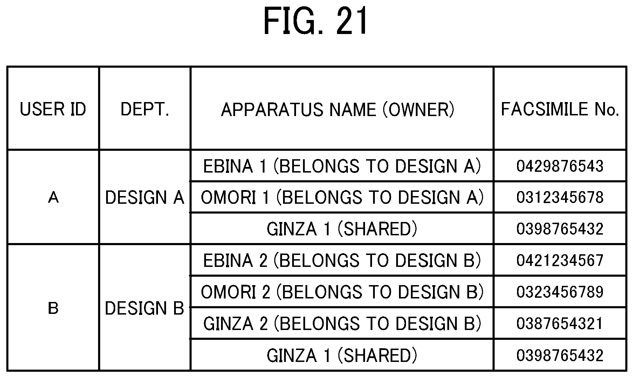

FIG. 21 illustrates an example of a management table associating a user, an organization (e.g., department), an owner organization of the accessing apparatus 12, and a facsimile number with each other. The management table illustrated in FIG. 21 includes, as data items, a user ID, a department an organization owning the apparatus 12, and a facsimile number.

The user ID is an example of identification information identifying a user. The department (department name) is an example of identification information identifying an organization or group to which the user belongs. The organization (department name) owning the apparatus is an example of identification information identifying the organization owning the apparatus 12. The facsimile number is an example of identification information identifying the apparatus 12.

For example, in the case of the management table illustrated in FIG. 21, the site to which the apparatus 12B (Omori 1) illustrated in FIG. 20 belongs is "Omori," and the owner organization is "design A". The site to which the apparatus 12C (Ginze 1) belongs is "Ginza," and the apparatus 12C is shared by the organizations "design A" and "design B." The site to which the apparatus 12D (Ebina 2) belongs is "Ebina," and the apparatus 12D is owned by "design B."

For example, when a received document stored in the facsimile reception server 10 is viewed from the apparatus 12, the organization owning the accessing apparatus 12 is determined based on the organization owning the apparatus 12 associated with the user ID of the accessing user in the management table illustrated in FIG. 21.

In the example illustrated in FIG. 20, assume that a user A accesses the document addressed to the apparatus 12B (Omori 1) installed in the site "Omori" from the apparatus 12D (Ebina 2) installed in the site "Ebina." In this case, the owner organization "design A" owning the apparatus 12B matches "design A" to which the user A belongs. Accordingly, the document is set to the read status.

In the example illustrated in FIG. 20, assume that a user B accesses the document addressed to the apparatus 12B (Omori 1) installed in the site "Omori" from the apparatus 12D (Ebina 2) installed in the site "Ebina." In this case, the owner organization "design A" owning the apparatus 12B does not match "design B" to which the user B belongs. Accordingly, the document is kept in the unread status.

In the example illustrated in FIG. 20, assume that the user A accesses the document addressed to the apparatus 12C (Ginza 1) installed in the site "Ginza" from the apparatus 12D (Ebina 2) installed in the site "Ebina." In this case, the apparatus 12C is shared by "design A" and "design B," that is, the owner organizations include "design A" to which the user A belongs. Accordingly, the document is set to the read status.

A description is given below of a modification of the above-described embodiments.

In the above-described embodiments, descriptions are given of examples in which the facsimile reception server 10 stores the received facsimile data and transmits the received facsimile data based on the request from the apparatus 12 or the device 14. Alternatively, aspects of the present disclosure are applicable to a system in which the apparatus 12 transfers a received document to a management apparatus and performs read/unread management. In such a system, the management apparatus may cause the apparatus 12 or the device 14 to download the received document and execute read/unread management of the received document.

The present invention can be implemented in any convenient form within the scope of the appended claims, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A server (10) for controlling a status of a document transmitted by facsimile from a sender apparatus (12) to a receiver apparatus (12) that performs facsimile transmission and reception, the server comprising:
a document providing unit (24) configured to provide, to a request source apparatus (12; 14), the document in response to receiving an acquisition request specifying the document, transmitted from the request source apparatus, wherein the request source apparatus is one of the receiver apparatus (12), to which the document is addressed by the sender apparatus, or a different apparatus (12; 14) from the receiver apparatus (12); and
a read management unit (22) configured to control a status change, from unread to read, of the document specified by the acquisition request based on information on the request source apparatus and information on the receiver apparatus (12) of the document;
wherein the document providing unit (24) provides the request source apparatus with list information on the document, the list information including information indicating whether the document is in the read status or in the unread status, such that the request source apparatus can display the list information to a user,
and wherein: the read management unit (22) sets, to the read status, the document specified by the acquisition request based on a determination that the information on the request source apparatus matches the information on the receiver apparatus (12) of the document specified by the acquisition request;
and the read management unit (22) maintains, in the unread status, the document specified by the acquisition request based on a determination that the information on the request source apparatus does not match the information on the receiver apparatus (12) of the document specified by the acquisition request.

2. The server according to claim 1,
wherein the information on the request source apparatus includes at least one of a facsimile number of the request source apparatus, an identifier unique to the request source apparatus, information on a site in which the request source apparatus is installed, or information on an organization to which the request source apparatus belongs, and
wherein the information on the receiver apparatus (12) includes at least one of a facsimile number of the receiver apparatus (12), an identifier unique to the receiver apparatus (12), information on a site in which the receiver apparatus (12) is installed, or information on an organization to which the receiver apparatus (12) belongs;
wherein said facsimile numbers, said identifiers, said information on a site and said information on an organization are respectively of a same type.

3. The server according to any one of claims 1 to 2,
wherein the read management unit (22):
refers to association information that associates user information with an apparatus; and
sets, to the read status, the document specified by the acquisition request based on a determination that the user information included in the acquisition request is associated with the information on the receiver apparatus (12) of the document.

4. The server according to claim 3, further comprising an information update control unit (26) configured to record information of a user who has logged in to the receiver apparatus (12) in association with the information on the receiver apparatus (12).

5. A management system comprising:
the server (10) according to any one of claims 1 to 4; and
a plurality of apparatuses (12; 14) connected via a network to the server (10), the plurality of apparatuses (12; 14) including the sender apparatus (12), the receiver apparatus (12), and the different apparatus,
wherein each of the sender apparatus (12) and the receiver apparatus (12) includes:
a facsimile communication control unit (40) configured to perform facsimile transmission and reception; and
a first document acquisition request unit (42) configured to transmit, to the server (10), the acquisition request of the document, and
wherein the different apparatus (12; 14) includes at least a second document acquisition request unit (42) configured to transmit, to the server (10), the acquisition request of the document.

6. A method for controlling a status of a document transmitted by facsimile from a sender apparatus (12) to a receiver apparatus,
the method comprising:
providing (S26), to a request source apparatus, the document in response to receiving an acquisition request specifying the document, transmitted from the request source apparatus, wherein the request source apparatus is one of the receiver apparatus, to which the document is addressed by the sender apparatus, or a different apparatus from the receiver apparatus;
controlling (S44) a status change, from an unread status to a read status, of the document specified by the acquisition request based on information on the request source apparatus and information on the receiver apparatus of the document,
wherein controlling (S44) the status change comprises:
determining whether the information on the request source apparatus matches the information on the receiver apparatus (12) of the document specified by the acquisition request; and at least one of the following:
based on a determination that the information on the request source apparatus matches the information on the receiver apparatus (12) of the document specified by the acquisition request, setting the document specified by the acquisition request to the read status; and
based on a determination that the information on the request source apparatus does not match the information on the receiver apparatus (12) of the document specified by the acquisition request, maintaining, in the unread
status, the document specified by the acquisition request;
providing, to the request source apparatus, list information on the document, the list information including information indicating whether the document is in the read status or in the unread status, such that the request source apparatus can display the list information to a user.

7. A computer-readable storage medium comprising instructions which, when executed by a computer, cause the computer to carry out the method of claim 6.

## Patentansprüche

1. Server (10) zum Steuern eines Status eines Dokuments, das durch Fax von einer Sendervorrichtung (12) an eine Empfängervorrichtung (12), die eine Faxübertragung und einen -empfang durchführt, übertragen wird, wobei der Server umfasst:
eine Dokumentenbereitstellungseinheit (24), die dazu konfiguriert ist, das Dokument als Reaktion auf das Empfangen einer Bezugsanforderung, die das Dokument spezifiziert und die von einer Anforderungsquellvorrichtung (12; 14) übertragen wird, an die Anforderungsquellvorrichtung bereitzustellen, wobei die Anforderungsquellvorrichtung eine von der Empfängervorrichtung (12), an die das das Dokument durch die Sendervorrichtung adressiert ist, oder einer verschiedenen Vorrichtung (12; 14) von der Empfängervorrichtung (12) ist; und
eine Leseverwaltungseinheit (22), die dazu konfiguriert ist, eine Statusänderung des Dokuments, das von der Bezugsanforderung spezifiziert wird, von Ungelesen zu Gelesen auf der Basis von Informationen zu der Anforderungsquellvorrichtung und Informationen zu der Empfängervorrichtung (12) des Dokuments zu steuern;
wobei die Dokumentenbereitstellungseinheit (24) der Anforderungsquellvorrichtung Listeninformationen zu dem Dokument bereitstellt, wobei die Listeninformationen Informationen einschließen, die angeben, ob das Dokument in dem Gelesen-Status oder in dem Ungelesen-Status ist, so dass die Anforderungsquellvorrichtung einem Benutzer die Listeninformationen anzeigen kann;
und wobei: die Leseverwaltungseinheit (22) das Dokument, das von der Bezugsanforderung spezifiziert wird, auf der Basis einer Bestimmung, dass die Informationen zu der Anforderungsquellvorrichtung mit den Informationen zu der Empfängervorrichtung (12) des Dokuments, das von der Bezugsanforderung spezifiziert wird, übereinstimmen, auf den Gelesen-Status einstellt;
und die Leseverwaltungseinheit (22) das Dokument, das von der Bezugsanforderung spezifiziert wird, auf der Basis einer Bestimmung, dass die Informationen zu der Anforderungsquellvorrichtung nicht mit den Informationen zu der Empfängervorrichtung (12) des Dokuments, das von der Bezugsanforderung spezifiziert wird, übereinstimmen, in dem Ungelesen-Status belässt.

2. Server nach Anspruch 1,
wobei die Informationen zu der Anforderungsquellvorrichtung mindestens eines von einer Faxnummer der Anforderungsquellvorrichtung, einer Kennung, die einzigartig für die Anforderungsquellvorrichtung ist, Informationen zu einem Standort, an dem die Anforderungsquellvorrichtung installiert ist, oder Informationen zu einem Unternehmen, zu dem die Anforderungsquellvorrichtung gehört, einschließen, und
wobei die Informationen zu der Empfängervorrichtung (12) mindestens eines von einer Faxnummer der Empfängervorrichtung (12), einer Kennung, die einzigartig für die Empfängervorrichtung (12) ist, Informationen zu einem Standort, an dem die Empfängervorrichtung (12) installiert ist, oder Informationen zu einem Unternehmen, zu dem die Empfängervorrichtung (12) gehört, einschließen;
wobei die Faxnummern, die Kennungen, die Informationen zu einem Standort und die Informationen zu einem Unternehmen jeweils von demselben Typ sind.

3. Server nach einem der Ansprüche 1 bis 2,
wobei die Leseverwaltungseinheit (22):
sich auf Assoziationsinformationen bezieht, die Benutzerinformationen mit einer Vorrichtung assoziieren; und
das Dokument, das von der Bezugsanforderung spezifiziert wird, auf der Basis einer Bestimmung, dass die Benutzerinformationen, die in der Bezugsanforderung eingeschlossen sind, mit den Informationen zu der Empfängervorrichtung (12) des Dokuments assoziiert sind, auf den Gelesen-Status einstellt.

4. Server nach Anspruch 3, ferner umfassend eine Informationsaktualisierungssteuereinheit (26), die dazu konfiguriert ist, Informationen eines Benutzers, der sich an der Empfängervorrichtung (12) angemeldet hat, in Assoziation mit den Informationen zu der Empfängervorrichtung (12) aufzuzeichnen.

5. Verwaltungssystem, umfassend:
den Server (10) nach einem der Ansprüche 1 bis 4, und
eine Vielzahl von Vorrichtungen (12; 14), die mittels eines Netzwerks mit dem Server (10) verbunden ist, wobei die Vielzahl von Vorrichtungen (12; 14) die Sendervorrichtung (12), die Empfängervorrichtung (12) und die verschiedene Vorrichtung einschließt,
wobei jede der Sendervorrichtung (12) und der Empfängervorrichtung (12) einschließt:
eine Faxkommunikationssteuereinheit (40), die dazu konfiguriert ist, eine Faxübertragung und einen -empfang durchzuführen; und
eine erste Dokumentenbezugsanforderungseinheit (42), die dazu konfiguriert ist, die Bezugsanforderung des Dokuments an den Server (10) zu übertragen, und
wobei die verschiedene Vorrichtung (12; 14) mindestens eine zweite Dokumentenbezugsanforderungseinheit (42) einschließt, die dazu konfiguriert ist, die Bezugsanforderung des Dokuments an den Server (10) zu übertragen.

6. Verfahren zum Steuern eines Status eines Dokuments, das durch Fax von einer Sendervorrichtung (12) an eine Empfängervorrichtung übertragen wird,
wobei das Verfahren umfasst:
Bereitstellen (S26) des Dokuments als Reaktion auf das Empfangen einer Bezugsanforderung, die das Dokument spezifiziert und die von einer Anforderungsquellvorrichtung übertragen wird, an die Anforderungsquellvorrichtung, wobei die Anforderungsquellvorrichtung eine von der Empfängervorrichtung, an die das das Dokument durch die Sendervorrichtung adressiert ist, oder einer von der Empfängervorrichtung verschiedenen Vorrichtung ist;
Steuern (S44) einer Statusänderung des Dokuments, das von der Bezugsanforderung spezifiziert wird, von einem Ungelesen-Status zu einem Gelesen-Status auf der Basis von Informationen zu der Anforderungsquellvorrichtung und Informationen zu der Empfängervorrichtung des Dokuments,
wobei das Steuern (S44) der Statusänderung umfasst:
Bestimmen, ob die Informationen zu der Anforderungsquellvorrichtung mit den Informationen zu der Empfängervorrichtung (12) des Dokuments, das von der Bezugsanforderung spezifiziert wird, übereinstimmen; und mindestens eines der folgenden:
auf der Basis einer Bestimmung, dass die Informationen zu der Anforderungsquellvorrichtung mit den Informationen zu der Empfängervorrichtung (12) des Dokuments, das von der Bezugsanforderung spezifiziert wird, übereinstimmen, Einstellen des Dokuments, das von der Bezugsanforderung spezifiziert wird, auf den Gelesen-Status; und
auf der Basis einer Bestimmung, dass die Informationen zu der Anforderungsquellvorrichtung nicht mit den Informationen zu der Empfängervorrichtung (12) des Dokuments, das von der Bezugsanforderung spezifiziert wird, übereinstimmen, Belassen des Dokuments, das von der Bezugsanforderung spezifiziert wird, in dem Ungelesen-Status;
Bereitstellen von Listeninformationen zu dem Dokument an die Anforderungsquellvorrichtung, wobei die Listeninformationen Informationen einschließen, die angeben, ob das Dokument in dem Gelesen-Status oder in dem Ungelesen-Status ist, so dass die Anforderungsquellvorrichtung einem Benutzer die Listeninformationen anzeigen kann.

7. Computerlesbares Speichermedium, umfassend Anweisungen, die bei Ausführung durch einen Computer bewirken, dass der Computer das Verfahren nach Anspruch 6 ausführt.

## Revendications

1. Serveur (10) permettant de commander un statut d'un document émis par télécopie par un appareil émetteur (12) à destination d'un appareil récepteur (12) effectuant une émission et réception de télécopies, le serveur comprenant :
une unité de fourniture de document (24) configurée pour fournir le document à un appareil source de demande (12 ; 14) en réaction à la réception d'une demande d'acquisition mentionnant le document, émise par l'appareil source de demande, ledit appareil source de demande étant un parmi l'appareil récepteur (12), auquel le document est adressé par l'appareil émetteur, ou un appareil (12 ; 14) différent de l'appareil récepteur (12), et
une unité de gestion de lecture (22) configurée pour commander un changement de statut, de non lu à lu, du document mentionné par la demande d'acquisition, sur la base d'informations portant sur l'appareil source de demande et d'informations portant sur l'appareil récepteur (12) du document ;
ladite unité de fourniture de document (24) fournissant, à l'appareil source de demande, des informations de liste portant sur le document, les informations de liste incluant des informations indiquant si le statut du document est le statut lu ou non lu, de façon à permettre à l'appareil source de demande d'afficher les informations de liste à un utilisateur ;
et dans lequel : l'unité de gestion de lecture (22) règle le document mentionné par la demande d'acquisition au statut lu sur la base d'une détermination selon laquelle les informations portant sur l'appareil source de demande correspondent aux informations portant sur l'appareil récepteur (12) du document mentionné par la demande d'acquisition,
et l'unité de gestion de lecture (22) maintient au statut non lu le document mentionné par la demande d'acquisition sur la base d'une détermination selon laquelle les informations portant sur l'appareil source de demande ne correspondent pas aux informations portant sur l'appareil récepteur (12) du document mentionné par la demande d'acquisition.

2. Serveur selon la revendication 1,
dans lequel les informations portant sur l'appareil source de demande incluent au moins un parmi un numéro de télécopieur de l'appareil source de demande, un identifiant unique à l'appareil source de demande, des informations portant sur un site auquel l'appareil source de demande est installé ou des informations portant sur une organisation à laquelle appartient l'appareil source de demande, et
dans lequel les informations portant sur l'appareil récepteur (12) incluent au moins un parmi un numéro de télécopieur de l'appareil récepteur (12), un identifiant unique à l'appareil récepteur (12), des informations portant sur un site auquel l'appareil récepteur (12) est installé ou des informations portant sur une organisation à laquelle appartient l'appareil récepteur (12) ;
dans lequel lesdits numéros de télécopieurs, lesdits identifiants, lesdites informations portant sur un site et lesdites informations portant sur une organisation sont respectivement d'un même type.

3. Serveur selon l'une quelconque des revendications 1 à 2,
dans lequel l'unité de gestion de lecture (22) :
se réfère à des informations d'association qui associent des informations utilisateur à un appareil, et
règle le document mentionné par la demande d'acquisition au statut lu sur la base d'une détermination selon laquelle les informations utilisateur incluses dans la demande d'acquisition sont associées aux informations portant sur l'appareil récepteur (12) du document.

4. Serveur selon la revendication 3, comprenant en outre une unité de commande d'actualisation d'informations (26) configurée pour enregistrer des informations concernant un utilisateur qui s'est connecté à l'appareil récepteur (12) en association avec les informations portant sur l'appareil récepteur (12).

5. Système de gestion comprenant :
le serveur (10) selon l'une quelconque des revendications 1 à 4, et
une pluralité d'appareils (12 ; 14) connectés par un réseau au serveur (10), la pluralité d'appareils (12 ; 14) incluant l'appareil émetteur (12), l'appareil récepteur (12) et l'appareil différent ;
chacun des appareils émetteur (12) et récepteur (12) incluant :
une unité de commande de communication par télécopie (40) configurée pour effectuer une émission et une réception de télécopies, et
une première unité de demande d'acquisition de document (42) configurée pour émettre, à destination du serveur (10), la demande d'acquisition du document, et
ledit appareil différent (12 ; 14) incluant au moins une deuxième unité de demande d'acquisition de document (42) configurée pour émettre, à destination du serveur (10), la demande d'acquisition du document.

6. Procédé de commande d'un statut d'un document émis par télécopie par un appareil émetteur (12) à destination d'un appareil récepteur,
le procédé comprenant les étapes consistant à :
fournir (S26) le document à un appareil source de demande en réaction à la réception d'une demande d'acquisition mentionnant le document, émise par l'appareil source de demande, ledit appareil source de demande étant un parmi l'appareil récepteur, auquel le document est adressé par l'appareil expéditeur, ou un appareil différent de l'appareil récepteur ;
commander (S44) un changement de statut, de statut non lu à statut lu, concernant le document mentionné par la demande d'acquisition, sur la base d'informations portant sur l'appareil source de demande et d'informations portant sur l'appareil récepteur du document,
la commande (S44) du changement de statut comprenant les étapes consistant à :
déterminer si les informations portant sur l'appareil source de demande correspondent ou ne correspondent pas aux informations portant sur l'appareil récepteur (12) du document mentionné par la demande d'acquisition ; et au moins l'une des étapes suivantes consistant à :
sur la base d'une détermination selon laquelle les informations portant sur l'appareil source de demande correspondent aux informations portant sur l'appareil récepteur (12) du document mentionné par la demande d'acquisition, régler le document mentionné par la demande d'acquisition au statut lu, et
sur la base d'une détermination selon laquelle les informations portant sur l'appareil source de demande ne correspondent pas aux informations portant sur l'appareil récepteur (12) du document mentionné par la demande d'acquisition, maintenir au statut non lu le document mentionné par la demande d'acquisition ;
fournir, à l'appareil source de demande, des informations de liste portant sur le document, les informations de liste incluant des informations indiquant si le statut du document est le statut lu ou non lu, de façon à permettre à l'appareil source de demande d'afficher les informations de liste à un utilisateur.

7. Support de stockage lisible par ordinateur comprenant des instructions qui, lorsqu'elles sont exécutées par un ordinateur, amènent l'ordinateur à mettre en œuvre le procédé selon la revendication 6.
